# EUROPEAN PATENT SPECIFICATION

(11) **EP 3 126 136 B1**
(45) Date of publication and mention of the grant of the patent: **06.05.2020**
(21) Application number: 15710199.9
(22) Date of filing: 18.03.2015
(51) Int. Cl.: B32B 7/00, B32B 15/00, B32B 15/08, B32B 15/09, B32B 27/00, B32B 27/08, B32B 27/18, B32B 27/22, B32B 27/36, B32B 1/02, B65D 65/42, B32B 7/03, B32B 27/20

(54) **POLYESTER FILM HAVING A MULTILAYERED STRUCTURE FOR LAMINATING TO A METAL SUBSTRATE, METAL SUBSTRATE HAVING SUCH A POLYESTER FILM AND CONTAINER HAVING A COMPONENT MANUFACTURED FROM THIS METAL SUBSTRATE**
POLYESTERFOLIE MIT MEHRSCHICHTSTRUKTUR ZUR LAMINIERUNG AN EINEM METALLSUBSTRAT, METALLSUBSTRAT MIT EINER SOLCHEN POLYESTERFOLIE UND BEHÄLTER MIT EINER AUS DIESEM METALLSUBSTRAT HERGESTELLTEN KOMPONENTE
FILM DE POLYESTER AYANT UNE STRUCTURE MULTICOUCHE POUR STRATIFICATION D'UN SUBSTRAT MÉTALLIQUE, LEDIT SUBSTRAT POSSÉDANT UN TEL FILM ET RÉCIPIENT AYANT UN COMPOSANT FABRIQUÉ À PARTIR D'UN TEL SUBSTRAT

(30) Priority: 31.03.2014 EP 14162883
(43) Date of publication of application: 08.02.2017
(73) Proprietor: Tata Steel IJmuiden B.V., 1951 JZ Velsen-Noord (NL)
(72) Inventor: PENNING, Jan Paul, NL-1970 CA IJmuiden (NL); PATTIASINA, Hans, NL-1970 CA IJmuiden (NL)
(74) Representative: Group Intellectual Property Services
(86) International application number: PCT/EP2015/055614
(87) International publication number: WO 2015/150073

(56) References cited:
- WO-A1-2012/146654
- JP-A- H08 156 210
- JP-A- H09 272 191
- JP-A- H10 226 031
- KR-A- 20060 009 167
- KR-A- 20060 105 991
- US-A1- 2004 115 453
- US-A1- 2008 261 063

## Description

The present invention is directed to a polyester film having a multilayered structure laminated onto a metal substrate, a process of producing such a metal substrate having such a polymeric film laminated to at least one face thereof and a container part manufactured from this metal substrate.

It is well known in the art of can making to coat or laminate a thin polymeric film onto a metal substrate, from which a can is formed, e.g. in a DRD process. The polymeric film may serve various purposes, such as providing corrosion protection to the metal substrate, maintaining the flavour and other organoleptical properties of the food contained into the can, offering printability when applied as an outer (decorative) layer and the like.

The polymeric film is typically produced as a "continuous" web of polymeric film, which is wound into a coil. Poor winding behaviour may generate web breaks and other defects, such as folds, wrinkles and creases, in the coiled film. These distortions may damage the film thus coiled, but also affect the properties of the final product such as a can having a polymeric protective coating, which should be free from defects such as air bubbles, blisters, folds and creases.

Problems related to poor winding of thin films and the occurrence of film defects during winding of thin films are often associated with friction and/or adherence between adjacent film layers. These problems occur when the friction and/or adherence between film layers is too high. Methods for improving winding properties are often based on either reduction of the friction and/or increasing the slipperiness between film layers wound onto each other.

One widely known method to reduce friction is to increase the surface roughness of films by incorporating particulates that are insoluble in the polymeric matrix material. Examples of these particulates, also known as anti-blocking agents in this technical area, include kaolin, talc, silica, titania, alumina, cross linked (cured) polymeric particulates and the like.

Another well-known method for reducing friction between film layers is based on the use of so-called slip additives, which reduce the coefficient of friction. However, they are typically used in combination with the above anti-blocking agents.

EP 696502 A1 has disclosed a polyester film composed of a polyester base and formed on at least one side thereof a coating layer formed from a mixture mainly comprising a copolyester composition and oxidized wax and/or natural wax, which composition contains a polyoxyalkylene glycol component in an amount of 1 wt.% or above to less than 40 wt.%. The oxidized wax is an ester constituted by a higher fatty acid and a higher mono-alcohol, wherein an oxygen-containing group is introduced by oxidizing the ethylene chain moiety. It is said that the oxidized wax or natural wax offers an improvement of the slipperiness and anti-blocking property. The content of the wax is 30-0.1 wt.%, preferably 15-1 wt.%. The layer thickness of the coating layer is preferably 0.001-1 micrometer, more preferably 0.01-0.2 micrometer. According to EP 696502 this film can be used for various purposes like a base film for magnetic recording materials and a base film for printing including adhering toner.

US 2010/0068355 A1 discloses a heat-sealable, coextruded composite polymeric film comprising a substrate layer and on a surface thereof a heat-sealable layer, wherein the substrate layer and the heat-sealable layer are based on different copolyester materials and the heat-sealable layer comprises one or more waxes. The amount of wax is in the range of 0.1 - 3 wt.%, preferably 0.5-3, more preferably no more than 2, and typically 1-2 % of the heat-sealable layer. The film may be used in packaging.

From US 6652979 B1 a biaxially-drawn polyester film for application as the inner face of a metal can is known, which comprises a particular polyester composition containing 0.1-2 wt.% of a carnauba wax or stearyl stearate. It is said that the film shows outstanding release properties (non-stick properties to the contents of the can). In order to enhance the non-stick property, the handling and the processability it is necessary to employ internal, inorganic particles or organic particles in an amount of 0.005 to 10 wt.%, preferably 0.2-5 wt.%, more preferably 0.3-4 wt.%.

US 2006/0210817 A1 has disclosed a resin film laminated metal sheet for can manufacturing. The resin film for forming the inner face of the can comprises a polyester as a main component and 0.1-2.0 % wax in view of release property.

US 2008/0261063 A1 has disclosed a resin coated metal sheet comprising a metal sheet, a lower polyester resin layer and an upper polyester resin layer, which contains 0.1-5.0 wt.% olefin wax for release properties and can formability.

JP2005178048 discloses a unidirectionally stretched polyester film laminated on at least one face of a metal substrate, the polyester film having a three-layer structure comprising a polyester core and two polyester skin layers, wherein one of the polyester skin layers comprises an polyethylene wax slip additive in an amount of from 100 ppm to 1500 ppm.

The use of anti-blocking agents in the form of insoluble particles, either in the skin layers or throughout the film has some drawbacks in can manufacturing, e.g. including a deep draw operation. The particles contained in the film may accumulate on the machine tools of the processing equipment and can cause damage and wear thereof. The particles may also generate voids in the film and thus can affect the functional properties of the coating. Also particle size, distribution and amount may vary whether the film is made by extrusion or casting and further by any stretching step.

Organic slip additives are more expensive than inorganic anti-blocking agents and in practice slip additives are typically accompanied by particulate anti-blocking agents to achieve desired winding properties of the film. Examples of the combined use of slip additives and anti-blocking agents is disclosed e.g. in US 4 606 976 A, US 4 921 670 A and JP 2003 225981 A.

The present invention aims at improving the handling and processability of a polyester film for lamination to a metal substrate, in particular for application to a metal substrate for can manufacturing.

A further objective of the invention is to improve the winding properties of a polyester film, while maintaining its formability and metal adhering properties.

According to the invention one or more of the above objects are achieved by a metal substrate having a polyester film polyester film having a multilayered structure comprising a polyester core and two polyester skin layers laminated on at least one face of the metal substrate, wherein the polyester skin layers each comprise an organic slip additive and wherein the polyester skin layers are essentially free from particulates that are insoluble in the polyester matrix of the respective skin layer. For the sake of avoiding misunderstanding, the metal substrate with the polyester film laminated to at least one face of the metal substrate is referred to as a laminate.

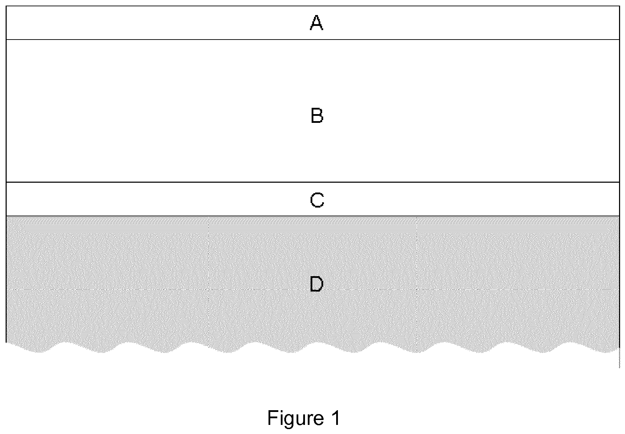

The polyester film according to the invention has a structure comprising at least three layers (see figure 1), i.e. two skin layers (A, C) sandwiching a core (B). The core comprises one or more core layers. Each skin layer comprises one or more organic slip additives for reducing the coefficient of friction. Furthermore the skin layers are essentially free of particulates, specifically inorganic particles, that are not soluble in the respective polyester matrix. In other words the skin layers do not contain any particulate inorganic anti-blocking agents, commonly used for increasing the surface roughness, in an effective amount, such as inorganic particles. Thus the invention avoids the above risks associated with the use of permanent particulates in the skin layers. Advantageously the polyester core is essentially free of slip additives, as the slipperiness improving properties are only required in the polyester skin layers. Thus, the core or at least one of the core layers, preferably all core layers, in case of a multilayered core does/do not comprise the relatively expensive slip additives in an effective amount for improving slipperiness.

The invention solves the problem of poor winding and handling of thin polyester films. When the polyester film is subsequently laminated to a metal substrate (D in Figure 1), a polyester coated metal sheet (i.e. a laminate) is obtained, which has good film adhesion, excellent formability and corrosion resistance.

Surprisingly, the inventors also noted that the addition of slip additives in the outer and inner skin layer often results in a better performance of cans produced from the laminate after sterilisation. In many cases the tested variants showed an improved corrosion performance for the cans made from a laminate according to the invention when compared to cans made from a laminate where no slip additives are added to the outer and inner skin layer.

This surprising effect of improved performance is attributed to the slip additive's positive effect on limiting scuffing and other damage during canmaking and/or beading, which results in a lower porosity of the film. This is believed to be beneficial in limiting the chances of corrosion of the can during and after sterilisation. So the addition of the slip additive not only improves the winding and handling performance but in these cases it also has an additional advantage.

It is noted that a heat treatment to partly crystallise the PET polymer prior to filling and sterilising consisting of heating the cans to a temperature between 150 and 200 °C for 1 to 3 minutes was used had, in many cases, a positive effect on the corrosion performance. Although from the point of view of simplifying the polyester film it is advantageous to use the same composition and the same slip additive in both the outer and inner skin layer, it should be noted that the composition and/or the type and/or amount of slip additive may be different in the outer and inner skin layer.

Organic slip additives used in the invention are selected from carboxylic acid, carboxylic acid esters, carboxylic acid amides, fatty acids, fatty alcohols, fatty acid amides, bis fatty amides, amidic waxes, natural waxes, olefin waxes, paraffin waxes and any combination thereof. A more specific example of organic slip additives is montan wax, an extract of lignite and coal. Generally montan wax is mainly composed of non-glyceride, long-chain carboxylic acid esters (about 60-70%), free carboxylic acids (about 20-30%) and the remainder comprising compounds like long chain alcohols, ketones, hydrocarbons and resins.

The slip-additive is provided in an amount that on the one hand is suitable for reducing coiling problems and on the other hand is suitable for maintaining adhesion of the polyester film to a metal base layer. The amount of organic slip additive is above 0.15 weight.% and below 1 weight.% (above 1500 ppm and below 10000 ppm). This amount of organic slip additive is with respect to the respective skin layer. It was found that below the lower limit of 1500 ppm the winding quality was insufficient. A concentration of slip additive above the upper limit of 10000 ppm generally shows no further improvement. Preferably the amount of organic slip additive is in the range of 0.18-0.5 gew.% (1800-5000 ppm), more preferably 0.2-0.35 gew.% (2000-3500) ppm..

The polyester of the polyester film according to the invention is not restricted and is a polymer having a plurality of ester bonds in its chain. The skin layers themselves and/or the core may vary regarding the type and number of polyester(s) and/or co-polyester(s) contained therein. Poly(ethylene terephthalate) (PET) is a preferred example of a base polyester for the various film layers. Alternatively, the outer skin layer may comprises PBT and PET. The specific polyesters used in the various film layers are among others, dependent on the desired functionality in the further or final application of the film.

The thickness ratio of the film, expressed as the thickness of the first skin layer : thickness of the core : thickness of the second skin layer is advantageously in the range of 1 : 2 - 8: 0.5 - 4.

The film as cast, see the explanation hereinafter, has preferably a total thickness in the range of 30-200 micrometer. Generally, the film as cast will be subjected to unidirectional stretching in the machine direction (here also referred to by its common name "machine direction oriented film" or MDO film). Typically the stretching factor is in the range of 1:3 -1:5 in a single pass. Advantageously, the thickness of the film as stretched is in the range of 5-100 micrometer, such as 5 -50 micrometer, preferably 10-40 micrometer. A film thickness below the lower limit of 5 micrometer might cause problems in handling and further processing. Also the functional properties of a very thin film e.g. barrier properties might be insufficient. Above the upper limit the extra thickness offers no additional effect(s). The thickness of the skin layers is advantageously in the range of 1-25 micrometer. As said, the polyester film is a machine direction oriented (MDO) film.

The polyester film can be manufactured by melting a mixture of the respective components of each polyester layer in an extruder and co-extruding each molten polyester or mixture through an extrusion die. The film thus assembled is solidified, e.g. by casting it onto a cooled roll, or in case of calendering between two or more rolls. A film thus casted is typically an essentially amorphous film, which is non-oriented. After casting, usually the edges of the film are trimmed. Then the film is either coiled onto a reel or passed directly to a feeding roll of a stretching unit.

In the stretching process, the solid polyester film is fed through an appropriate stretching unit. This stretching unit may comprise a series of rolls. First, the film is heated, e.g. by one or more heating rolls, to a suitable temperature for stretching. The film then proceeds to feeding rolls which set the entrance velocity (vᵢₙ) for the stretching process. The film subsequently proceeds to drawing rolls running at a higher speed (vₒᵤₜ) than the feeding rolls to accomplish the stretching process. The distance between the feeding and drawing rolls, the drawing gap, is an important parameter which may be varied to achieve an optimum drawing process. The film is subsequently optionally passed on to one or more annealing and/or cooling rolls which may be utilised to anneal and/or cool the film in an appropriate way. All stages of the drawing process are conducted under well-defined film tension levels, which can be controlled by setting appropriate speeds, temperatures, etc. of the individual rolls.

After completing the stretching, the film edges may be trimmed again and the film is coiled on a reel. Between stretching and coiling, one or more of defect inspection, gauge measurement, surface treatment (corona, flame, spraying of (liquid) additives or agents, etc.) and/or slitting into multiple widths may be performed.

The invention also relates to a metal substrate having a polyester film according to the invention, which film is laminated to at least one face of the metal substrate. The stretched film is laminated onto a preheated metal substrate, preferably pre-heated to a temperature between 200 and 240 °C, preferably between 200 and 220 °C.. Next, the laminate is briefly heated to a temperature above the melting point of the film, followed by quenching and winding.

As the metal substrate, an uncoated metal may be used such as steel or aluminium or aluminium alloys, or a metallic-coated metal such as tinplate or galvanised steel. The metal substrate may comprise an additional conversion layer or passivation layer to further enhance the product performance and/or promote adhesion between the metal and the polyester film of the invention. This additional conversion layer or passivation layer can e.g. be based on chromium oxide, chromium/chromium oxide, titanium oxide, zirconium oxide or phosphates.

The invention also relates to an article, in particular a container e.g. a can, which comprises at least one component such as a body, an end, cup, ring, tab and the like, that is manufactured from the metal substrate as defined above according to the invention. Examples of the container comprise e.g. food cans, beverage cans and aerosol containers. Components of such containers e.g. a body, end, cup, ring, tab and the like are made from the metal substrate according to the invention.

Hereinafter the invention is illustrated by the following examples of making a multilayer polyester film comprising at least one core layer disposed between two skin layers, wherein a slip additive is added to both skin layers of the film.

In the following non-limitative examples a polyester film is produced on a film extrusion line using three single-screw extruders. Each extruder has a gravimetric dosing system that can feed a certain polyester composition (as a dry blend of various polyesters and/or polyester-based masterbatches) into the throat of the extruder. The polyester is then transported to a configuration of a feedblock, selector plate and flat extrusion die that produces a three layer film of the structure A/B/C. The thickness of each individual layer within the multilayer film structure is set by the mass output per unit time of each extruder. The molten polyester film leaving the extrusion die is cast onto a chill roll that is rotating at a certain speed such that, in combination with the combined mass flow out of all extruders, a cast film of a thickness of e.g. 50 - 120 µm is produced. The film thus casted is essentially non-oriented. The cast film is passed on to a slitting unit that trims off the film edges to obtain a film that has a uniform thickness across its width. The film is then moved on, within the same operation, to a stretching device consisting of a series of heated and cooled rollers. Here, the film is heated up to about 70 to 90°C (depending on the film composition), subsequently stretched in the machine direction by a factor in the range 1:3 - 1: 5 and passed over a series of rollers to cool the film. This stretching process is called the machine direction orientation or MDO process. Then, the film is passed through an on-line thickness measurement device and a second slitting unit to trim the film to its final desired width, and wound into a coil.

The following polyester resins are used in the examples:
- PET1: poly(ethylene terephthalate) copolymer in which about 3 mole% of terephthalic acid monomer units have been replaced with isophthalic acid monomer units, having an intrinsic viscosity of 0.8 dl/g (commercially available as Ramapet N180 from Indorama);
- PET2: poly(ethylene terephthalate) copolymer in which about 30 mole% of ethylene glycol monomer units has been replaced with cyclohexanedimethanol monomer units, having an intrinsic viscosity of 0.8 dl/g (available as Eastar 6763 from Eastman);
- PET3: poly(butylene terephthalate) homopolymer (available as Valox 315 from Sabic Innovative Plastics);
- PET4: masterbatch based on PET1, which is available from Sukano®, and contains 50% by weight of TiO₂ pigment;
- Slip additive is added in the form of a masterbatch, which is available from Sukano®, and contains a montan wax.

In Comparative Examples 1 and 2, and Inventive Examples 1 - 3 (according to the invention), a three-layer polyester film is produced, consisting of one central layer B and two skin layers A and C, in thickness ratio A:B:C = 1:3:1. Layer A consists essentially of PET1. Layer B consists of PET1. Layer C consists essentially of a 30/70 mixture (by weight) of PET1 and PET2, respectively.

In Comparative Example 1, the polyester film is produced as outlined above at a casting speed of 50 m/min and the cast film is drawn by a ratio of 1:4 to obtain an MDO film that is wound at 200 m/min. The MDO film has a total thickness of 15 µm (A/B/C = 3/9/3 µm). Here skin layer A faces towards the outer diameter of the film coil, while layer C faces towards the centre of the coil. Layer A contains 1500 ppm of a slip additive. The winding quality is very poor.

The qualitative examination of the winding quality is based on three main factors: 1) processing behaviour during winding, 2) the amount of wrinkles in the wound film surface and 2) the 'hardness' of the wound film coil. The results are classified as
- "very poor" - many wrinkles and a very soft coil; the entire film making process becomes unstable due to problems (moving coil, unstable film tension) even as the film is being wound up;
- "insufficient" - during winding, the coil looks reasonably good and the film process is stable; still the wound film contains wrinkles and the coil is soft, and starts to sag (become unround) during storage;
- "excellent" - very stable winding process resulting in mirror-like, wrinkle free film surface and a very hard coil, stable in time.

In Comparative Example 2, the polyester film is produced at a casting speed of 50 m/min and the cast film is drawn by a ratio of 1:4 to obtain an MDO film that is wound at 200 m/min. The MDO film has a total thickness of 15 µm (A/B/C = 3/9/3 µm). Layer A, which is wound on the outside of the film coil, contains 3000 ppm of a slip additive. The winding quality is very poor.

In Inventive Example 1, the polyester film is produced at a casting speed of 50 m/min and the cast film is drawn by a ratio of 1:4 to obtain an MDO film that is wound at 200 m/min. The MDO film has a total thickness of 20 µm (A/B/C = 4/12/4 µm). Both layer A and layer C contain 3000 ppm of a slip additive. The winding quality is excellent. The example shows that winding quality is considerably improved by adding the slip additive to both skin layers of the film, instead of one skin layer.

In Inventive Example 2, the polyester film is produced at a casting speed of 35 m/min and the cast film is drawn by a ratio of 1:4 to obtain an MDO film that is wound at 140 m/min. The MDO film has a total thickness of 30 µm (A/B/C = 6/18/6 µm). Both layer A and layer C contain 2250 ppm of a slip additive. The winding quality is excellent.

In Inventive Example 3, the polyester film is produced at a casting speed of 50 m/min and the cast film is wound directly, without stretching. The film has a total thickness of 60 µm (A/B/C = 12/36/12 µm). Both layer A and layer C contain 3000 ppm of a slip additive. The winding quality is excellent.

The wound film is then transported to a separate installation consisting of an unwinding station, an MDO stretching unit and a winder. After 7 days of production of the non-oriented cast film, the film is stretched using this unit at a draw ratio of 1:4 to give an MDO film of 15 µm final thickness. The winding quality is excellent.

This example shows that the beneficial effects of the addition of slip additive to both skin layers (in same amounts as used in Inventive Example 1) both in producing a non-oriented cast film, and during MDO stretching and winding in a separate process.

In Comparative Examples 3, 4 and 5 and Inventive Example 4, a three-layer polyester film is produced, consisting of one central layer B and two skin layers A and C, in thickness ratio A:B:C = 1:3:1. All layers consist essentially of a 75/25 mixture (by weight) of PET1 and PET3, respectively.

In Comparative Example 3, the polyester film is produced at a casting speed of 50 m/min and the cast film is drawn by a ratio of 1:4 to obtain an MDO film that is wound at 200 m/min. The MDO film has a total thickness of 15 µm (A/B/C = 3/9/3 µm). No slip additive is added to any of the layers. The winding quality is very poor.

In Comparative Example 4, the polyester film is produced at a casting speed of 50 m/min and the cast film is drawn by a ratio of 1:4 to obtain an MDO film that is wound at 200 m/min. The MDO film has a total thickness of 15 µm (A/B/C = 3/9/3 µm). Layer A, which is wound on the outside of the film coil, contains 3000 ppm of a slip additive. The winding quality is very poor.

In Comparative Example 5, the polyester film is produced at a casting speed of 50 m/min and the cast film is drawn by a ratio of 1:4 to obtain an MDO film that is wound at 200 m/min. The MDO film has a total thickness of 15 µm (A/B/C = 3/9/3 µm). Both layer A and layer C contain 1500 ppm of a slip additive. The winding quality is insufficient.

In Inventive Example 4, the polyester film is produced at a casting speed of 50 m/min and the cast film is drawn by a ratio of 1:4 to obtain an MDO film that is wound at 200 m/min. The MDO film has a total thickness of 15 µm (A/B/C = 3/9/3 µm). Both layer A and layer C contain 3000 ppm of a slip additive. The winding quality is excellent.

In Comparative Example 6, a three-layer polyester film is produced, consisting of one central layer B and two skin layers A and C, in thickness ratio A:B:C = 1:3:1. The skin layers A and C consist essentially of PET1. The central layer consists of a 67/33 mixture (by weight) of PET1 and PET4, respectively. The polyester film is produced at a casting speed of 50 m/min and the cast film is drawn by a ratio of 1:4 to obtain an MDO film that is wound at 200 m/min. The MDO film has a total thickness of 18 µm. Layer A, which is wound on the outside of the film coil, contains 7500 ppm of a slip additive. The winding quality is reasonable and a coil of several kilometres in length can be produced. However, directly after production, the coil starts to sag and becomes unround in shape. It cannot be used for further processing. Thus, the overall quality of the winding process and resulting coil is judged as insufficient.

In Table 1 below the above examples specifying the film layer structure and amount of slip additive and winding quality are summarized.

**Table 1. Overview of Comparative Examples 1-6 and Inventive Examples 1-4**

| **Example** | **Layer thickness (µm)** | | | **Amount of slip additive (ppm)** | | | **Winding quality** |
|---|---|---|---|---|---|---|---|
| **(Layer)** | **A** | **B** | **C** | **A** | **B** | **C** | |
| C.E. 1 | 3 | 9 | 3 | 1500 | 0 | 0 | Very poor |
| C.E. 2 | 3 | 9 | 3 | 3000 | 0 | 0 | Very poor |
| Inv. Ex. 1 | 4 | 12 | 4 | 3000 | 0 | 3000 | Excellent |
| Inv. Ex. 2 | 6 | 18 | 6 | 2250 | 0 | 2250 | Excellent |
| Inv. Ex. 3a | 12 | 36 | 12 | 3000 | 0 | 3000 | Excellent |
| Inv. Ex. 3b | 3 | 9 | 3 | 3000 | 0 | 3000 | Excellent |
| C.E. 3 | 3 | 9 | 3 | 0 | 0 | 0 | Very poor |
| C.E. 4 | 3 | 9 | 3 | 3000 | 0 | 0 | Very poor |
| C.E. 5 | 3 | 9 | 3 | 1500 | 0 | 1500 | Insufficient |
| Inv. Ex. 4 | 3 | 9 | 3 | 3000 | 0 | 3000 | Excellent |
| C.E. 6 | 3.6 | 10.8 | 3.6 | 7500 | 0 | 0 | Insufficient |

| | | | | | | | |
|---|---|---|---|---|---|---|---|
| C.E. = Comparative Example Inv. Ex. = Example according to the invention | | | | | | | |

In the following non-limitative examples, the good product performance of laminates according to the present invention is demonstrated. Various films have been produced having a three-layer structure consisting of one central layer B and two skin layers A and C. Layer A and B consist essentially of PET1. Layer C consists essentially of a 30/70 mixture (by weight) of PET1 and PET2, respectively.

In Inventive Example 5, the film has a total thickness of 20 µm and individual layer thicknesses of A:B:C = 4:12:4 µm. The film is produced according to the integrated cast film / MDO process and has 3000 ppm of slip additive in both skin layers A and C. The film is denoted Film II.

In Inventive Example 6, the film has a total thickness of 30 µm and individual layer thicknesses of A:B:C = 4:22:4 µm. The film is produced according to the integrated cast film / MDO process and has 3000 ppm of slip additive in both skin layers A and C. The film is denoted Film IV.

In Comparative Example 7, the film has a total thickness of 20 µm and individual layer thicknesses of A:B:C = 4:12:4 µm. The film does not contain any slip additive in any layer. It is produced by the two-step method of separate film casting and MDO stretching similar to the description in Inventive Example 3. The film is denoted Film I.

In Comparative Example 8, the film has a total thickness of 30 µm and individual layer thicknesses of A:B:C = 6:18:6 µm. The film does not contain any slip additive in any layer. It is produced by the two-step method of separate film casting and MDO stretching similar to the description in Inventive Example 3. The film is denoted Film III.

| **Example** | **Film** | **Layer thickness (µm)** | | | **Amount of slip additive (ppm)** | | |
|---|---|---|---|---|---|---|---|
| **(Layer)** | | **A** | **B** | **C** | **A** | **B** | **C** |
| Inv. Ex. 5 | Film II | 4 | 12 | 4 | 3000 | 0 | 3000 |
| Inv. Ex. 6 | Film IV | 4 | 22 | 4 | 3000 | 0 | 3000 |
| C. E. 7 | Film I | 4 | 12 | 4 | 0 | 0 | 0 |
| C. E. 8 | Film III | 6 | 18 | 6 | 0 | 0 | 0 |

To study the performance of the films as coatings on steel, the films were laminated onto a strip of tin-free steel, pre-heated to a temperature between 200 and 240 °C, preferably to a temperature between 200 and 220°C. The lamination process is carried out as generally described in WO 2012/146654 A1. After the laminating step, the polyester-coated steel sheet is briefly heated to a temperature above the melting point of the film, subsequently quenched and wound. All films are laminated in such a way that Layer C of the film is the layer in contact with the metal substrate (see Figure 1). It should be noted that both faces of the steel sheet are coated with a polyester film, where the composition of the film on the opposite side of the strip of the film to be tested is not relevant to the present test.

To evaluate the performance of the polyester-coated sheet, cans are produced from the polyester-coated. The cans are formed in such a way that the film to be tested is on the inside of the can.

In Inventive Example 5 and Comparative Example 7, cans are produced by a draw-redraw (DRD) process. To produce a can, a circular blank of 180 mm in diameter is cut from the polyester-coated steel sheet and formed into a can of 66 mm in diameter and about 90 mm in height, by first drawing a cup and then redrawing to the final can diameter and height in two successive redrawing steps.

The coating adhesion in the DRD can is tested by cutting strips of 15 mm in width and 80 mm in length from the can wall, in such a way that the long side of the test specimen is parallel to the can height direction. The coating is then peeled, starting from the top of the can wall, at a 180° angle using an Instron tensile tester, operating at a crosshead speed of 25 mm/min. The average peel force occurring between 10 mm and 30 mm of peel extension is taken as the peel force.

For cans made from Film I, the average peel force, obtained from five specimens, is 4.8 N, with a standard deviation of 0.4 N. For cans made from Film II, the average peel force, obtained from five specimens, is 4.4 N, with a standard deviation of 0.3 N. Thus, there is no significant difference in peel force (based on 95% confidence interval) between the two films.

Corrosion performance of the polyester-coated materials is studied by means of the so-called saline sterilisation test, described in detail by Boelen et al. in "Product performance of polymer coated packaging steel, study of the mechanism of defect growth in cans", Progress in Organic Coatings 50 (2004), 40-46. DRD cans (around 10 per variant) are three-quarter filled with tap water containing 3.6 wt.% NaCl. After closing, the cans are sterilised for 60 min at 121 °C. The cans are opened and rinsed with tap water immediately after sterilisation and inspected. Evaluation is done by visual inspection of the coating and counting the number of defects divided into four categories:
A: corrosion spot
B: corrosion spot with delamination front
C: white blister
D: brown blister with corrosion, less than 3 cm in size

The data are evaluated by the Sa number (Saline number), defined as: Sa = (1*#A + 5*#B + 20*#C + 100*#D) / total number of cans evaluated, where #A, #B, #C and #D are the number of all A, B, C and D defects observed in the cans evaluated. The weighing factors reflect the severity of the defect, a rust spot (A defect) obviously being much less important than a large brown blister (D defect). Note that when D defects larger than 3 cm in size are present, the extent of corrosion is expressed as the percentage of the can wall that is corroded. In this case, no Sa number is calculated. Based on general experience at the Applicant, the corrosion performance of the coating is sufficient for general food packaging applications when Sa < 20.

The results for cans made on the basis of Film I and Film II are shown below. In both cases, a very low amount of defects is found after the saline sterilisation tests, and Sa scores are far below the critical value of Sa = 20. The sterilisation performance of both coatings is excellent.

| Coating | #cans | #A | #B | #C | #D | Sa |
|---|---|---|---|---|---|---|
| Film I | 10 | 3 | 0 | 0 | 0 | 0.3 |
| Film II | 10 | 1 | 2 | 0 | 0 | 1.1 |

In conclusion, there is no negative effect of the use of a slip additive in both skin layers of a three layer coating, according to the invention, on the performance of the film as a coating on steel for, for instance, packaging application as demonstrated by experimental results on dry adhesion and corrosion performance in this sterilisation test.

In Inventive Example 6 and Comparative Example 8, the polyester films are laminated onto a tin-free steel packaging steel substrate of 0.288 mm thickness and TH340 temper. Cans were formed by a so-called Drawing and Wall Ironing (DWI) process into cans of 73 mm in diameter, characterised by a wall ironing reduction (thinning) of 50%. Beads are formed into the can wall. The corrosion performance of the cans was studied by the saline sterilisation test outlined above. The cans were filled with tap water containing 3.6 wt.% NaCl and sterilised for 90 minutes at 121 °C. The cans were opened and rinsed with tap water immediately after sterilisation and inspected. Based on the extent of corrosion on the beaded can walls, the cans are divided into "poor" cans, "mediocre" cans and "good" cans. In poor cans, more than 10% of the can wall surface is corroded. In mediocre cans, the can wall exhibits one or more isolated defects of A-, B-, C- or D-type, with no more than two D-type defects. The can wall shows no corrosion outside of these isolated defects. In good cans, the can wall exhibits only A-type defects, at a rate of less than 10 per can. The results are given below.

| **Example / Film type** | **# poor cans** | **# mediocre cans** | **# good cans** |
|---|---|---|---|
| C.E.8 / Film III | 2/10 (10-20 % of the surface corroded) | 3/10 (C-defects, ≤2 D defects) | 5/10 (≤10 A defects) |
| I.E. 6 / Film IV | 0/10 | 0/10 | 10/10 (≤ 1 A defects) |

The laminate according to the present invention does not show any poor or mediocre cans, only good cans and thus show much better corrosion performance than the laminate from Comparative Example 8.

## Claims

1. Metal substrate having a polyester film laminated on at least one face of the metal substrate to produce a laminate, wherein the polyester film is a unidirectionally stretched and machine direction oriented film, the polyester film having a multilayered structure comprising a polyester core (B) and two polyester skin layers (A, C), for laminating to a metal substrate (D), wherein the polyester skin layers each comprise an organic slip additive and wherein the polyester skin layers are free from inorganic particulates, wherein the amount of slip additive in each skin layer is above 1500 ppm and below 10000 ppm, wherein the slip additive is selected from the group consisting of carboxylic acids, carboxylic acid esters, carboxylic acid amides, fatty acids, fatty alcohols, fatty acid amides, bis fatty amides, amidic waxes, natural waxes, olefin waxes, paraffin waxes and any combination thereof.

2. Laminate according to claim 1 wherein the metal substrate is a tin-free steel or a metallic-coated metal.

3. Laminate according to claim 1 or claim 2, wherein the slip additive comprises montan wax.

4. Laminate according to any one of claims 1 to 3, wherein the amount and/or type of slip additive in the outer skin layers is different from the amount and/or type of slip additive in the inner skin layers.

5. Laminate according to any one of claims 1 to 4, wherein the amount of slip additive in both skin layers is in the range of 1800-5000 ppm, more preferably 2000-3500, with respect to the respective skin layer.

6. Laminate according to any one of the preceding claims, wherein the thickness ratio of the film, expressed as the thickness first skin layer : thickness core : thickness second skin layer is in the range of 1: 2-8: 0.5-4.

7. Laminate according to any one of the preceding claims, wherein the thickness of the film as cast and before stretching is in the range of 30 - 200 micrometer.

8. Laminate according to any one of the preceding claims, wherein the film as stretched has a thickness in the range of 5-100 micrometers, preferably 10-40 micrometer.

9. Laminate according to any one of the preceding claims, wherein the outer skin layer comprises PBT and PET.

10. Process for producing a laminate according to any one of the claims 1 to 9 comprising the steps of:
- Manufacturing a polyester film by melting a mixture of the respective components of each polyester layer in an extruder and co-extruding each molten polyester or mixture through an extrusion die;
- Solidifying the film by casting it onto a cooled roll or calendering between two or more rolls followed by:
a. coiling the film, optionally after trimming the edges of the film, uncoiling the film and passing the film to a feeding roll of a unidirectional stretching unit, stretching the film in the machine direction, coiling the film, optionally after trimming the edges of the stretched film or
b. passing the film optionally after trimming the edges of the film, directly to a feeding roll of a unidirectional stretching unit, stretching the film in the machine direction, coiling the film, optionally after trimming the edges of the stretched film;
- Laminating the stretched film onto a preheated metal substrate, preferably preheated to a temperature between 200 and 240 °C
- briefly heating the laminate to a temperature above the melting point of the film, followed by quenching and winding.

11. Process according to claim 10 wherein the preheated metal substrate is pre-heated to a temperature between 200 and 220 °C.

12. Process according to claim 10 or 11 wherein the stretching factor is in the range of 1:3 - 1:5 in a single pass, preferably wherein the thickness of the film as stretched is in the range of 5-100 micrometer.

13. Process according to any one of claims 10 to 12 wherein the metal substrate is a tin-free steel or a metallic-coated metal such as tinplate or galvanised steel.

14. Process according to any one of claims 10 to 13 wherein the film between stretching and coiling is subjected to one or more of defect inspection, gauge measurement, surface treatment (corona, flame, spraying of (liquid) additives or agents) and/or slitting into multiple widths.

15. Container, comprising a component made from the laminate according to any one of claims 1 to 9.

## Patentansprüche

1. Metallsubstrat mit einer Polyesterfolie, die auf mindestens eine Seite des Metallsubstrats laminiert ist, um ein Laminat herzustellen, wobei die Polyesterfolie eine unidirektional gestreckte und in Maschinenrichtung orientierte Folie ist, wobei die Polyesterfolie eine mehrschichtige Struktur aufweist, die einen Polyesterkern (B) hat und zwei Polyesterhautschichten (A, C) zum Laminieren auf ein Metallsubstrat (D), wobei die Polyesterhautschichten jeweils ein organisches Gleitadditiv enthalten und wobei die Polyesterhautschichten frei von anorganischen Partikeln sind, wobei die Menge an Gleitadditiv in jeder Hautschicht über 1500 ppm und unter 10000 ppm liegt, wobei das Gleitadditiv ausgewählt ist aus der Gruppe bestehend aus Carbonsäuren, Carbonsäureestern, Carbonsäureamiden, Fettsäuren, Fettalkoholen, Fettsäureamiden, Bisfettamiden, Amidwachse, natürliche Wachse, Olefinwachse, Paraffinwachse und jede Kombination davon.

2. Laminat nach Anspruch 1, wobei das Metallsubstrat ein zinnfreies Stahl oder ein metallisch beschichtetes Metall ist.

3. Laminat nach Anspruch 1 oder 2, wobei das Gleitadditiv Montanwachs umfasst.

4. Laminat nach einem der Ansprüche 1 bis 3, wobei sich die Menge und / oder Art des Gleitadditivs in den Außenhautschichten von der Menge und / oder Art des Gleitadditivs in den Innenhautschichten unterscheidet.

5. Laminat nach einem der Ansprüche 1 bis 4, wobei die Menge an Gleitadditiv in beiden Hautschichten im Bereich von 1800-5000 ppm, bevorzugter 2000-3500, in Bezug auf die jeweilige Hautschicht liegt.

6. Laminat nach einem der vorhergehenden Ansprüche, wobei das Dickenverhältnis der Folie, ausgedrückt als Dicke der ersten Hautschicht:Dicke des Kerns:Dicke der zweiten Hautschicht, im Bereich von 1:2-8:0.5-4 liegt.

7. Laminat nach einem der vorhergehenden Ansprüche, wobei die Dicke der Folie im gegossenen Zustand und vor dem Strecken im Bereich von 30 - 200 Mikrometer liegt.

8. Laminat nach einem der vorhergehenden Ansprüche, wobei die gestreckte Folie eine Dicke im Bereich von 5 bis 100 Mikrometer, vorzugsweise 10 bis 40 Mikrometer, aufweist.

9. Laminat nach einem der vorhergehenden Ansprüche, wobei die Außenhautschicht PBT und PET umfasst.

10. Verfahren zur Herstellung eines Laminats nach einem der Ansprüche 1 bis 9, umfassend die Schritte:
- Herstellen einer Polyesterfolie durch Schmelzen eines Gemisches der jeweiligen Komponenten jeder Polyesterschicht in einem Extruder und Coextrudieren jedes geschmolzenen Polyesters oder Gemisches durch eine Extrusionsdüse;
- Verfestigen der Folie durch Gießen auf eine gekühlte Rolle oder Kalandrieren zwischen zwei oder mehr Rollen, gefolgt von:
a. Aufwickeln der Folie, gegebenenfalls nach dem Beschneiden der Folienkanten, Abwickeln der Folie und Weiterleiten der Folie an eine Zuführrolle einer unidirektionalen Streckeinheit, Strecken der Folie in Maschinenrichtung, Aufwickeln der Folie, gegebenenfalls nach dem Beschneiden der Ränder der gestreckten Folie oder
b. Weiterleiten der Folie gegebenenfalls nach dem Beschneiden der Folienränder direkt zu einer Zuführrolle einer unidirektionalen Streckeinheit, Strecken der Folie in Maschinenrichtung, Aufwickeln der Folie gegebenenfalls nach dem Beschneiden der Ränder der gestreckten Folie;
- Laminieren der verstreckten Folie auf ein vorgewärmtes Metallsubstrat, vorzugsweise vorgewärmt auf eine Temperatur zwischen 200 und 240 ° C
- Das Laminat kurz auf eine Temperatur über dem Schmelzpunkt der Folie erwärmen und anschließend abschrecken und wickeln.

11. Verfahren nach Anspruch 10, wobei das vorgewärmte Metallsubstrat auf eine Temperatur zwischen 200 und 220°C vorgewärmt wird.

12. Verfahren nach Anspruch 10 oder 11, wobei der Streckfaktor in einem einzigen Durchgang im Bereich von 1:3 bis 1:5 liegt, wobei die Dicke der gestreckten Folie vorzugsweise im Bereich von 5 bis 100 Mikrometer liegt.

13. Verfahren nach einem der Ansprüche 10 bis 12, wobei das Metallsubstrat ein zinnfreies Stahl oder ein metallbeschichtetes Metall wie Weißblech oder galvanisierter Stahl ist.

14. Verfahren nach einem der Ansprüche 10 bis 13, bei dem die Folie zwischen Strecken und Aufwickeln an einer oder mehreren von Prüfung von Defekten, Dickenmessung, Oberflächenbehandlung (Korona, Flammen, Versprühen von (flüssigen) Additiven oder Mitteln) unterworfen wird und / oder in mehrere Streifen geschnitten wird.

15. Behälter, umfassend ein Teil gemacht aus dem Laminat nach einem der Ansprüche 1 bis 9.

## Revendications

1. Substrat métallique ayant un film polyester stratifié sur au moins une face du substrat métallique pour produire un stratifié, dans lequel le film polyester est un film étiré unidirectionnellement et orienté dans le sens machine, le film polyester ayant une structure multicouche comprenant une couche médiane en polyester (B) et deux couches de peau en polyester (A, C), pour stratification sur un substrat métallique (D), dans lesquelles les couches de peau en polyester comprennent chacune un additif de glissement organique et dans laquelle les couches de peau en polyester sont exemptes de particules inorganiques, dans lesquelles la quantité de l'additif de glissement dans chaque couche de peau est supérieur à 1500 ppm et inférieur à 10000 ppm, l'additif de glissement étant choisi du groupe constitué des acides carboxyliques, des esters d'acide carboxylique, des amides d'acide carboxylique, des acides gras, des alcools gras, des amides d'acide gras, des bis amides gras, cires amidiques, cires naturelles, cires d'oléfine, cires de paraffine et toute combinaison de celles-ci.

2. Stratifié selon la revendication 1, dans lequel le substrat métallique est un acier non étamée ou un métal revêtu d'un couche métallique.

3. Stratifié selon la revendication 1 ou la revendication 2, dans lequel l'additif de glissement comprend de la cire de montan.

4. Stratifié selon l'une quelconque des revendications 1 à 3, dans lequel la quantité et / ou le type d'additif de glissement dans la couche de peau exterieur est différent de la quantité et / ou le type d'additif de glissement dans la couche de peau interieur.

5. Stratifié selon l'une quelconque des revendications 1 à 4, dans lequel la quantité d'additif de glissement dans les deux couches de peau est dans la gamme de 1800 à 5000 ppm, plus préférablement de 2000 à 3500, par rapport à la couche de peau respective.

6. Stratifié selon l'une quelconque des revendications précédentes, dans lequel le rapport d'épaisseur du film, exprimé en tant qu'épaisseur première couche de peau:épaisseur couche mediane: épaisseur seconde couche de peau est dans la plage de 1:2-8:0.5-4.

7. Stratifié selon l'une quelconque des revendications précédentes, dans lequel l'épaisseur du film tel que coulé et avant étirage est dans la plage de 30 à 200 micromètres.

8. Stratifié selon l'une quelconque des revendications précédentes, dans lequel le film tel qu'étiré a une épaisseur dans la plage de 5 à 100 micromètres, de préférence de 10 à 40 micromètres.

9. Stratifié selon l'une quelconque des revendications précédentes, dans lequel la couche externe de peau comprend du PBT et du PET.

10. Procédé de fabrication d'un stratifié selon l'une quelconque des revendications 1 à 9 comprenant les étapes de:
- fabriquer un film de polyester en faisant fondre un mélange des composants respectifs de chaque couche de polyester dans une extrudeuse et en co-extrudant chaque polyester ou mélange fondu à travers une filière d'extrusion;
- Solidifier le film en le coulant sur un rouleau refroidi ou en calandrant entre deux rouleaux ou plus, suivi de:
a. enrouler le film, éventuellement après avoir coupé les bords du film, dérouler le film et passer le film sur un rouleau d'alimentation d'une unité d'étirage unidirectionnel, étirer le film dans le sens machine, enrouler le film, éventuellement après avoir coupé les bords du film étiré ou
b. faire passer le film, éventuellement après avoir coupé les bords du film, directement vers un rouleau d'alimentation d'une unité d'étirage unidirectionnel, étirer le film dans le sens machine, enrouler le film, éventuellement après avoir coupé les bords du film étiré;
- Stratification du film étiré sur un substrat métallique préchauffé, de préférence préchauffé à une température comprise entre 200 et 240 ° C
- chauffer brièvement le stratifié à une température supérieure au point de fusion du film, suivi d'une trempe et enroulement.

11. Procédé selon la revendication 10, dans lequel le substrat métallique préchauffé est préchauffé à une température comprise entre 200 et 220 ° C.

12. Procédé selon la revendication 10 ou 11, dans lequel le facteur d'étirage est dans la plage de 1:3 -1:5 en une seule passe, de préférence dans lequel l'épaisseur du film tel qu'étiré est dans la plage de 5 à 100 micromètres.

13. Procédé selon l'une quelconque des revendications 10 à 12, dans lequel le substrat métallique est un acier non étamée ou métal revêtu d'un couche métallique tel que du fer blanc ou de l'acier galvanisé.

14. Procédé selon l'une quelconque des revendications 10 à 13, dans lequel le film entre l'étirage et le bobinage est soumis à un ou plusieurs de etapes de contrôle de défauts, mesure d'épaisseur, traitement de surface (corona, flamme, pulvérisation d'additifs ou d'agents (liquides)) et / ou refendage en plusieurs largeurs.

15. Récipient, comprenant un composant réalisé à partir du stratifié selon l'une quelconque des revendications 1 à 9.
